# EUROPÄISCHE PATENTSCHRIFT

(11) **EP 3 220 031 B1**
(45) Veröffentlichungstag und Bekanntmachung des Hinweises auf die Patenterteilung: **02.12.2020**
(21) Anmeldenummer: 17159817.0
(22) Anmeldetag: 08.03.2017
(51) Int. Cl.: F16L 5/08, H02G 3/22

(54) **DICHTUNGSEINSATZ ZUM ABDICHTEN EINER LEITUNG GEGENÜBER EINER AUSNEHMUNG**
SEAL INSERT FOR SEALING A CONDUIT RELATIVE TO A RECESS
ÉLÉMENT D'ÉTANCHÉITÉ D'UNE CONDUITE PAR RAPPORT À UN ÉVIDEMENT

(30) Priorität: 15.03.2016 DE 202016101432 U
(43) Veröffentlichungstag der Anmeldung: 20.09.2017
(73) Patentinhaber: DOYMA GmbH & Co, 28876 Oyten (DE)
(72) Erfinder: Chikatimalla, Rajesh, 28876 Oyten (DE)
(74) Vertreter: Eisenführ Speiser

(56) Entgegenhaltungen:
- CN-Y- 201 335 211
- DE-U1- 8 624 326
- DE-U1-202005 008 176
- US-A- 5 826 919

## Beschreibung

Die Erfindung betrifft einen Dichtungseinsatz zum Abdichten einer Leitung gegenüber einer Ausnehmung in einem Wandabschnitt einer Gebäudebewandung, mit einem äußeren Dichtabschnitt zum Abdichten gegen die Ausnehmung, mindestens einem inneren Dichtabschnitt zum Abdichten gegen die Leitung und einer ersten Spanneinrichtung zum Verspannen des äußeren Dichtabschnitts, wobei die erste Spanneinrichtung zwei relativ zueinander bewegbare Spannkörper zum Verspannen des äußeren Dichtabschnitts aufweist.

Die Versorgung eines Gebäudes mit Medien wird regelmäßig durch erdverlegte Leitungen realisiert. Um diese Leitungen in das Gebäude einzuführen, muss die Gebäudebewandung durchdrungen werden. Zur Durchdringung der Gebäudebewandung weisen üblicherweise mehrere Wandabschnitte eine Ausnehmung auf, durch welche sich eine oder mehrere Leitungen erstrecken.

Die Gebäudebewandung ist mit einer Abdichtung versehen, um die sich in dem Gebäude befindlichen Personen, Sachgegenstände und Gebäudeeinrichtungen vor äußeren Einflüssen, insbesondere eindringendem Wasser und Feuchtigkeit zu schützen. Die Ausnehmungen in den Wandabschnitten der Gebäudebewandung unterbrechen somit die Gebäudeabdichtung.

Um einen gas- und wasserdichten Übergang von der Gebäudeabdichtung zur Leitung herzustellen, werden gattungsgemäße Dichtungseinsätze verwendet. Durch den Einsatz solcher Dichtungseinsätze wird die Gebäudeabdichtung wiederhergestellt.

Gattungsgemäße Dichtungseinsätze weisen einen äußeren und mindestens einen inneren Dichtabschnitt auf. Der äußere Dichtabschnitt dient zum Abdichten gegen die Ausnehmung, wobei der mindestens eine innere Dichtabschnitt zum Abdichten gegen die Leitung dient.

Es hat sich gezeigt, dass der Anpressdruck des äußeren Dichtabschnitts und des inneren Dichtabschnitts in einem vorgegebenen Bereich liegen muss, damit eine widerstandsfähige und dauerhafte Abdichtung gewährleistet werden kann.

Bekannte Dichtungseinsätze weisen Spanneinrichtungen auf, welche gleichzeitig sowohl den äußeren Dichtabschnitt mit der Ausnehmung als auch den inneren Dichtabschnitt mit der Leitung verspannen. Die Verspannung des äußeren Dichtabschnitts und die Verspannung des inneren Dichtabschnitts sind somit voneinander abhängig. Aufgrund dieser Abhängigkeit sind die Einsatzmöglichkeiten entsprechender Dichtungseinsätze beschränkt, sodass zur Verspannung verschiedener Leitungstypen oftmals unterschiedliche Dichtungseinsätze eingesetzt werden müssen, um eine Verspannung in dem gewünschten Wertebereich zu erzeugen.

Zum Auflösen dieser Abhängigkeit ist man dazu übergegangen, die Verspannung des äußeren Dichtabschnitts von der Verspannung des inneren Dichtabschnitts zu entkoppeln, sodass eine Beeinflussung des inneren Dichtabschnitts durch die für den äußeren Dichtabschnitt eingesetzte Spanneinrichtung vermieden wird.

Das Erfordernis des Anpassens der Verspannung des äußeren Dichtabschnitts und des inneren Dichtabschnitts an einen vorgegebenen Wertebereich bedingt bei den bekannten Dichtungseinsätzen jedoch den Einsatz von Messwerkzeugen, wie beispielsweise Drehmomentschlüsseln, sodass beim Einbau des Dichtungseinsatzes Verspannkörper, wie beispielsweise Spannschrauben mit einem konkreten Drehmoment angezogen werden können. Spezialwerkzeuge wie bspw. Drehmomentschlüssel sind häufig nicht in ausreichender Anzahl auf einer Baustelle verfügbar. Dies führt regelmäßig dazu, dass auf die Verwendung von Spezialwerkzeug verzichtet wird, woraus sich häufig eine zu geringe oder eine überhöhte Verspannung des äußeren Dichtabschnitts ergibt. Dies kann zur Beeinträchtigung der Dichtwirkung führen und sollte somit zur Gewährleistung einer dauerhaften und hohen Dichtwirkung vermieden werden.

US 5 826 919 A zeigt ein Durchgangs-Anschlussstück zum Abdichten einer Leitung gegenüber einer Behälterwandung, die eine Ausnehmung für die durch die Behälterwandung hindurchführbare Leitung aufweist. Das Anschlussstück hat einen ringförmigen Dichtflansch, der an der Behälterwandung abdichtend anliegt und mittels eines Stützringes, eines Anpressringes und Bolzen um die Ausnehmung gegen die Behälterwandung verspannt wird. Die Bolzen weisen über ihre Länge einen gewindefreien Abschnitt am Schaft auf.

DE 20 2005 008176 U1 offenbart eine Dichtungsvorrichtung zum Abdichten der Durchführung einer Leitung durch eine Wandöffnung. Die Dichtungsvorrichtung umfasst drei Spannkörper, wobei ein äußerer Dichtkörper dem ersten und zweiten Spannkörper und ein innerer Dichtkörper dem zweiten und dritten Spannkörper zugeordnet ist. Beim Verspannen der Spannkörper mittels Bolzen werden der innere und äußere Dichtkörper axial gestaucht und dehnen sich entweder radial nach außen oder nach innen aus.

Die Aufgabe der vorliegenden Erfindung ist es folglich einen Dichtungseinsatz bereitzustellen, dessen äußerer Dichtabschnitt unabhängig von dem inneren Dichtabschnitt verspannbar ist und wobei das Verspannen des äußeren Dichtabschnitts ohne den Einsatz von Spezialwerkzeug erfolgen kann.

Die Aufgabe wird durch einen Dichtungseinsatz der eingangs genannten Art gelöst, indem der mindestens eine innere Dichtabschnitt zur Vermeidung einer Beeinflussung durch die erste Spanneinrichtung von dem äußeren Dichtabschnitt entkoppelt ist, und ein Anschlag die Verspannung des äußeren Dichtabschnitts begrenzt.

Die Erfindung macht sich die Erkenntnis zunutze, dass anstelle eines Messwerkzeugs, wie beispielsweises eines Drehmomentschlüssels, der Dichtungseinsatz mit einem Anschlag ausgestattet werden kann, um den Abstand zwischen den Spannkörpern und die Verspannung des äußeren Dichtabschnitts konstruktiv zu begrenzen. Durch die konstruktive Begrenzung der Verspannung des äußeren Dichtabschnitts kann die Schraubverbindung intuitiv "auf Anschlag" festgezogen werden, somit entfällt die Notwendigkeit des Einsatzes von Spezialwerkzeug. Auf diese Weise wird das Risiko einer zu geringen oder einer überhöhten Verspannung des äußeren Dichtabschnitts erheblich verringert.

Eine bevorzugte Ausführungsform des erfindungsgemäßen Dichtungseinsatzes weist eine zweite Spanneinrichtung zum Verspannen des inneren Dichtabschnitts auf, wobei der äußere Dichtabschnitt zur Vermeidung einer Beeinflussung durch die zweite Spanneinrichtung von dem inneren Dichtabschnitt entkoppelt ist. Es kommt somit zu einer vollständigen Entkopplung des äußeren Dichtabschnitts und des inneren Dichtabschnitts hinsichtlich ihrer Verspannung.

In einer weiteren bevorzugten Ausführungsform des erfindungsgemäßen Dichtungseinsatzes weist die zweite Spanneinrichtung zwei relativ zueinander bewegbare Spannkörper zum Verspannen des inneren Dichtabschnitts auf, wobei ein Anschlag die Verspannung des inneren Dichtabschnitts begrenzt. Dadurch, dass auch beim Verspannen des inneren Dichtabschnitts ein Anschlag Verwendung findet, kann nunmehr sowohl der äußere Dichtabschnitt als auch der innere Dichtabschnitt auf konkrete Verspannwerte eingestellt werden, ohne dass die Verwendung von Spezialwerkzeug erforderlich ist. Dies führt zu einem verringerten Montageaufwand und erweitert die Einsatzmöglichkeiten des Dichtungseinsatzes.

Sofern vorstehend und nachfolgend von dem inneren Dichtabschnitt gesprochen wird, so ist darunter zu verstehen, dass die jeweiligen Ausführungen auch auf Ausführungsbeispiele mit mehr als einem inneren Dichtabschnitt anwendbar sind, nämlich für einen, mehrere oder sämtliche der inneren Dichtabschnitte.

In einer besonders bevorzugten Ausführungsform des erfindungsgemäßen Dichtungseinsatzes weisen die Spannkörper der ersten Spanneinrichtung jeweils eine Pressfläche auf, wobei die Pressflächen relativ zueinander bewegbar sind. Zwischen den Pressflächen ist ein formveränderlicher Dichtkörper ausgebildet, wobei der Dichtkörper den äußeren Dichtabschnitt trägt. Die Pressflächen der Spannkörper der ersten Spanneinrichtung sind vorzugsweise senkrecht zu der Bewegungsachse der Spannkörper der ersten Spanneinrichtung ausgerichtet. Alternativ weisen die Pressflächen der Spannkörper der ersten Spanneinrichtung einen Winkel im Bereich von 35 bis 55 Grad gegenüber einer Ebene auf, welche senkrecht zu der Bewegungsachse der Spannkörper der ersten Spanneinrichtung ausgerichtet ist. In einer besonders bevorzugten Ausführungsform entspricht dieser Winkel etwa 45 Grad. Die Spannkörper der ersten Spanneinrichtung sind vorzugsweise aus Kunststoff oder Metall ausgebildet. Der formveränderliche Dichtkörper ist vorzugsweise aus einem Elastomermaterial ausgebildet. Insbesondere weist der äußere Dichtabschnitt eine zylinderförmige äußere Mantelfläche auf.

In einer weiteren bevorzugten Ausführungsform des erfindungsgemäßen Dichtungseinsatzes weisen die Spannkörper der zweiten Spanneinrichtung jeweils eine Pressfläche auf, wobei die Pressflächen relativ zueinander bewegbar sind. Zwischen den Pressflächen ist ein formveränderlicher Dichtkörper ausgebildet, wobei der Dichtkörper den inneren Dichtabschnitt trägt. Die Pressflächen der Spannkörper der zweiten Spanneinrichtung sind vorzugsweise senkrecht zu der Bewegungsachse der Spannkörper der zweiten Spanneinrichtung ausgerichtet. Alternativ weisen die Pressflächen der Spannkörper der zweiten Spanneinrichtung einen Winkel im Bereich von 35 Grad bis 55 Grad gegenüber einer Ebene auf, welche senkrecht zu der Bewegungsachse der Spannkörper der zweiten Spanneinrichtung ausgerichtet ist. In einer besonders bevorzugten Ausführungsform entspricht dieser Winkel etwa 45 Grad. Die Spannkörper der zweiten Spanneinrichtung sind vorzugsweise aus Kunststoff oder Metall ausgebildet. Der formveränderliche Dichtkörper ist vorzugsweise aus einem Elastomermaterial ausgebildet. Insbesondere weist der innere Dichtabschnitt eine zylinderförmige innere Mantelfläche auf.

In einer vorteilhaften Ausführungsform des erfindungsgemäßen Dichtungseinsatzes weisen die Spannkörper der ersten Spanneinrichtung jeweils eine Anschlagsfläche auf, wobei die Anschlagsflächen relativ zueinander bewegbar sind. Die Anschlagsflächen schlagen in einer Anschlagsposition entweder aneinander oder an dem Dichtkörper an. Durch ein Abstimmen der Geometrie der Spannkörper der ersten Spanneinrichtung an die Geometrie des Dichtkörpers lässt sich die maximale Verformung, welche beim Anschlagen der Anschlagsflächen aneinander oder an dem Dichtkörper auftritt, festlegen. Auf diese Weise wird die Verspannung des äußeren Dichtabschnitts begrenzt.

In einer weiteren bevorzugten Ausführungsform des erfindungsgemäßen Dichtungseinsatzes weist zumindest ein Spannkörper der ersten Spanneinrichtung eine Stützfläche auf, welche den Dichtkörper in radialer Richtung nach innen abstützt. Vorzugsweise weisen beide Spannkörper der ersten Spanneinrichtung eine Stützfläche auf, welche den Dichtkörper in radialer Richtung nach innen abstützt. Durch die radiale Abstützung des Dichtkörpers nach innen wird eine Ausdehnung des Dichtkörpers in radialer Richtung nach innen verhindert oder zumindest erheblich reduziert. Durch die Verhinderung oder Reduzierung der Ausdehnung des Dichtkörpers in radialer Richtung nach innen wird erreicht, dass aus der gesamten oder zumindest aus einem Großteil der zur Verspannung des äußeren Dichtabschnitts aufgebrachten Verspannkraft eine radiale Ausdehnung des Dichtkörpers nach außen erfolgt und somit die notwendige Verspannkraft reduziert wird.

In einer anderen bevorzugten Ausführungsform des erfindungsgemäßen Dichtungseinsatzes weist zumindest ein Spannkörper der zweiten Spanneinrichtung eine Stützfläche auf, welche den Dichtkörper in radialer Richtung nach außen abstützt. Vorzugsweise weisen beide Spannkörper der zweiten Spanneinrichtung eine Stützfläche auf, welche den Dichtkörper in radialer Richtung nach außen abstützt. Durch die radiale Abstützung des Dichtkörpers nach außen wird eine Ausdehnung des Dichtkörpers in radialer Richtung nach außen verhindert oder zumindest erheblich reduziert. Durch die Verhinderung oder Reduzierung der Ausdehnung des Dichtkörpers in radialer Richtung nach außen wird erreicht, dass aus der gesamten oder zumindest aus einem Großteil der zur Verspannung des inneren Dichtabschnitts aufgebrachten Verspannkraft eine radiale Ausdehnung des Dichtkörpers nach innen erfolgt und somit die notwendige Verspannkraft reduziert wird.

In einer besonders bevorzugten Ausführungsform des erfindungsgemäßen Dichtungseinsatzes umfasst die Stützfläche des zumindest einen Spannkörpers der ersten Spanneinrichtung einen parallel zu dem äußeren Dichtabschnitt verlaufenden Stützabschnitt. Alternativ oder zusätzlich umfasst die Stützfläche des zumindest einen Spannkörpers der ersten Spanneinrichtung einen geneigt zu dem äußeren Dichtabschnitt verlaufenden Stützabschnitt. Insbesondere der zu dem äußeren Dichtabschnitt geneigt verlaufende Stützabschnitt der Stützfläche des zumindest einen Spannkörpers der ersten Spanneinrichtung führt zu einer weiteren Verringerung der notwenigen Verspannkraft, da die Ausdehnung des Dichtkörpers in radialer Richtung nach außen durch die Neigung des Stützabschnitts weiter gefördert wird.

In einer weiteren Ausführungsform des erfindungsgemäßen Dichtungseinsatzes umfasst die Stützfläche des zumindest einen Spannkörpers der zweiten Spanneinrichtung einen parallel zu dem inneren Dichtabschnitt verlaufenden Stützabschnitt. Alternativ oder zusätzlich umfasst die Stützfläche des zumindest einen Spannkörpers der zweiten Spanneinrichtung einen geneigt zu dem inneren Dichtabschnitt verlaufenden Stützabschnitt. Insbesondere der zu dem inneren Dichtabschnitt geneigt verlaufende Stützabschnitt der Stützfläche des zumindest einen Spannkörpers der zweiten Spanneinrichtung führt zu einer weiteren Verringerung der notwenigen Verspannkraft, da die Ausdehnung des Dichtkörpers in radialer Richtung nach innen durch die Neigung des Stützabschnitts weiter gefördert wird. Ferner ist es bevorzugt, dass die Anschlagsflächen und die Pressflächen der Spannkörper der ersten Spanneinrichtung wirkverbunden sind, sodass eine Relativbewegung der Pressflächen der Spannkörper der ersten Spanneinrichtung zu einer Relativbewegung der Anschlagsflächen der Spannkörper der ersten Spanneinrichtung führt. Dies lässt sich auf einfache Art und Weise dadurch erreichen, dass die Spannkörper der ersten Spanneinrichtung jeweils einstückig ausgebildet sind und die Anschlagsfläche und die Pressfläche eines Spannkörpers der ersten Spanneinrichtung an dessen Oberfläche ausgebildet sind.

In einer vorteilhaften Ausführungsform des erfindungsgemäßen Dichtungseinsatzes weisen die Spannkörper der zweiten Spanneinrichtung jeweils eine Anschlagsfläche auf, wobei die Anschlagsflächen relativ zueinander bewegbar sind. Die Anschlagsflächen schlagen in einer Anschlagsposition entweder aneinander oder an dem Dichtkörper an. Durch ein Abstimmen der Geometrie der Spannkörper der zweiten Spanneinrichtung an die Geometrie des Dichtkörpers lässt sich die maximale Verformung, welche beim Anschlagen der Anschlagsflächen aneinander oder an dem Dichtkörper auftritt, festlegen. Auf diese Weise wird die Verspannung des inneren Dichtabschnitts begrenzt.

Ferner ist es bevorzugt, dass die Anschlagsflächen und die Pressflächen der Spannkörper der zweiten Spanneinrichtung wirkverbunden sind, sodass eine Relativbewegung der Pressflächen der Spannkörper der zweiten Spanneinrichtung zu einer Relativbewegung der Anschlagsflächen der Spannkörper der zweiten Spanneinrichtung führt. Dies lässt sich auf einfache Art und Weise dadurch erreichen, dass die Spannkörper der zweiten Spanneinrichtung jeweils einstückig ausgebildet sind und die Anschlagsfläche und die Pressfläche eines Spannkörpers der zweiten Spanneinrichtung an dessen Oberfläche ausgebildet sind.

Eine besonders bevorzugte Ausführungsform des erfindungsgemäßen Dichtungseinsatzes weist einen oder mehrere bewegbare Anschlagskörper auf, welche jeweils in einer Anschlagsposition an eine Anschlagsfläche anschlagen. Insbesondere bei einer rotationssymmetrischen Ausbildung des Dichtungseinsatzes ist es bevorzugt, dass mehrere Anschlagskörper auf einer Kreisbahn angeordnet sind, wobei nebeneinander angeordnete benachbarte Anschlagskörper jeweils äquidistant voneinander beabstandet sind. Vorzugsweise sind vier, fünf, sechs, sieben oder acht im Wesentlichen identische Anschlagskörper auf einer Kreisbahn um eine zentrale Mittelachse des Dichtungseinsatzes angeordnet. Vorzugsweise sind die Anschlagsflächen, gegen welche der eine oder die mehreren Anschlagskörper anschlagen, an einem der Spannkörper der ersten Spanneinrichtung ausgebildet.

Der erfindungsgemäße Dichtungseinsatz wird ferner dadurch vorteilhaft weitergebildet, dass der Anschlag der ersten Spanneinrichtung einstellbar ist. Die Einstellbarkeit des Anschlags der ersten Spanneinrichtung wird vorzugsweise durch die Auswahl von Anschlagskörpern einer geeigneten Länge oder durch das Verändern der Position der Anschlagsfläche für die Anschlagskörper erreicht. Vorzugsweise weist die Dichtungseinrichtung ein oder mehrere auswechselbare Anschlagsbuchsen auf, wobei die eine oder die mehreren Anschlagsbuchsen jeweils eine Anschlagsfläche für einen Anschlagskörper tragen. Vorzugsweise sind die verwendeten Anschlagsbuchsen identisch ausgebildet. Insbesondere weisen die Anschlagsbuchsen einen Bodenabschnitt auf, welcher die Anschlagsfläche für einen Anschlagskörper ausbildet. Vorzugsweise weisen die Spannkörper der ersten Spanneinrichtung oder die Anschlagsbuchsen Schlitze auf, durch welche weitere Bodenelemente einschiebbar sind. Auf diese Weise kann die Position der Anschlagsflächen variiert werden, sodass eine Einstellbarkeit der Spanneinrichtung realisiert ist.

In einer weiteren Ausführungsform des erfindungsgemäßen Dichteinsatzes ist der Anschlag der zweiten Spanneinrichtung einstellbar. Die Einstellbarkeit des Anschlags der zweiten Spanneinrichtung wird vorzugsweise durch die Auswahl von Anschlagskörpern einer geeigneten Länge oder durch das Verändern der Position der Anschlagsfläche für die Anschlagskörper erreicht. Vorzugsweise weist die Dichtungseinrichtung ein oder mehrere auswechselbare Anschlagsbuchsen auf, wobei die eine oder die mehreren Anschlagsbuchsen jeweils eine Anschlagsfläche für einen Anschlagskörper tragen. Vorzugsweise sind die verwendeten Anschlagsbuchsen identisch ausgebildet. Insbesondere weisen die Anschlagsbuchsen einen Bodenabschnitt auf, welcher die Anschlagsfläche für einen Anschlagskörper ausbildet. Vorzugsweise weisen die Spannkörper der zweiten Spanneinrichtung oder die Anschlagsbuchsen Schlitze auf, durch welche weitere Bodenelemente einschiebbar sind. Auf diese Weise kann die Position der Anschlagsflächen variiert werden, sodass eine Einstellbarkeit der Spanneinrichtung realisiert ist.

Der erfindungsgemäße Dichtungseinsatz wird ferner dadurch vorteilhaft weitergebildet, dass die Pressflächen der Spannkörper der ersten Spanneinrichtung mit dem einen oder den mehreren Anschlagskörpern wirkverbunden sind, sodass eine Bewegung des einen oder der mehreren Anschlagskörpern eine Relativbewegung der Pressflächen der Spannkörper der ersten Spanneinrichtung verursacht. Insbesondere verursacht eine Linearbewegung oder Rotationsbewegung des einen oder der mehreren Anschlagskörper eine Relativbewegung der Pressflächen der Spannkörper der ersten Spanneinrichtung. Die Relativbewegung der Pressflächen der Spannkörper der ersten Spanneinrichtung ist beispielsweise eine Annäherung der Spannkörper der ersten Spanneinrichtung zueinander, sodass eine Verpressung des zwischen den Spannkörpern der ersten Spanneinrichtung angeordneten Dichtkörpers erfolgt. Die Relativbewegung der Pressflächen der Spannkörper der ersten Spanneinrichtung kann ferner zu einer Vergrößerung des Abstands zwischen den Pressflächen der Spannkörper der ersten Spanneinrichtung führen, sodass der zwischen den Pressflächen der Spannkörper der ersten Spanneinrichtung angeordnete Dichtkörper bei der Bewegung des einen oder der mehreren Anschlagskörper entspannt wird und somit die Verpressung verringert oder aufgehoben wird.

Der erfindungsgemäße Dichtungseinsatz wird ferner dadurch vorteilhaft weitergebildet, dass die Pressflächen der Spannkörper der zweiten Spanneinrichtung mit dem einen oder den mehreren Anschlagskörpern wirkverbunden sind, sodass eine Bewegung des einen oder der mehreren Anschlagskörpern eine Relativbewegung der Pressflächen der Spannkörper der zweiten Spanneinrichtung verursacht. Insbesondere verursacht eine Linearbewegung oder Rotationsbewegung des einen oder der mehreren Anschlagskörper eine Relativbewegung der Pressflächen der Spannkörper der zweiten Spanneinrichtung. Die Relativbewegung der Pressflächen der Spannkörper der zweiten Spanneinrichtung ist beispielsweise eine Annäherung der Spannkörper der zweiten Spanneinrichtung zueinander, sodass eine Verpressung des zwischen den Spannkörpern der zweiten Spanneinrichtung angeordneten Dichtkörpers erfolgt. Die Relativbewegung der Pressflächen der Spannkörper der zweiten Spanneinrichtung kann ferner zu einer Vergrößerung des Abstands zwischen den Pressflächen der Spannkörper der zweiten Spanneinrichtung führen, sodass der zwischen den Pressflächen der Spannkörper der zweiten Spanneinrichtung angeordnete Dichtkörper bei der Bewegung des einen oder der mehreren Anschlagskörper entspannt wird und somit die Verpressung verringert oder aufgehoben wird.

In einer weiteren Ausführungsform des erfindungsgemäßen Dichtungseinsatzes weist ein Spannkörper der ersten Spanneinrichtung eine oder mehrere Gewindebohrungen auf. Der eine oder die mehreren Anschlagskörper umfassen jeweils einen Gewindeabschnitt, welcher mit einer Gewindebohrung verschraubbar ist. Vorzugsweise ist der eine oder sind die mehreren Anschlagskörper als Schrauben ausgebildet und erstrecken sich durch eine Durchgangsbohrung eines Spannkörpers der ersten Spanneinrichtung und greifen in den Gewindeabschnitt einer Gewindebohrung in dem anderen Spannkörper der ersten Spanneinrichtung. Ein Anziehen und somit eine rotatorische Bewegung des einen oder der mehreren Anschlagskörper verursacht so mit einer Relativbewegung der Pressflächen der Spannkörper der ersten Spanneinrichtung zueinander.

In einer weiteren Ausführungsform des erfindungsgemäßen Dichtungseinsatzes weist ein Spannkörper der zweiten Spanneinrichtung eine oder mehrere Gewindebohrungen auf. Der eine oder die mehreren Anschlagskörper umfassen jeweils einen Gewindeabschnitt, welcher mit einer Gewindebohrung verschraubbar ist. Vorzugsweise ist der eine oder sind die mehreren Anschlagskörper als Schrauben ausgebildet und erstrecken sich durch eine Durchgangsbohrung eines Spannkörpers der zweiten Spanneinrichtung und greifen in den Gewindeabschnitt einer Gewindebohrung in dem anderen Spannkörper der zweiten Spanneinrichtung. Ein Anziehen und somit eine rotatorische Bewegung des einen oder der mehreren Anschlagskörper verursacht so mit einer Relativbewegung der Pressflächen der Spannkörper der zweiten Spanneinrichtung zueinander.

In einer vorteilhaften Weiterbildung des erfindungsgemäßen Dichtungseinsatzes weisen das eine oder die mehreren Gewindebohrungen jeweils ein Sackloch auf, wobei der Grund des Sacklochs als Anschlagsfläche für den Anschlagskörper ausgebildet ist. Vorzugsweise ist in dieser Ausführungsform der eine oder sind die mehreren Anschlagskörper als Schrauben ausgebildet, wobei die dem Schraubenkopf gegenüberliegende Stirnfläche der Schraube gegen den Grund des Sacklochs anschlägt. Der Anschlag zum Begrenzen der Verspannung wird somit durch das Anschlagen der dem Schraubenkopf gegenüberliegenden Stirnfläche der Schraube im Grund des Sacklochs erreicht.

Der erfindungsgemäße Dichtungseinsatz wird durch mehrere innere Dichtabschnitte zum Abdichten gegen Leitungen unterschiedlichen Durchmessers weitergebildet. Einer der mehreren inneren Dichtabschnitte ist vorzugsweise mittels der zweiten Spanneinrichtung fluiddicht mit einer Leitung verspannbar. Vorzugsweise ist die zweite Spanneinrichtung als umlaufende Verspannmanschette ausgebildet, dessen flexibles Stahlband um den Dichtkörper, welcher die inneren Dichtabschnitte trägt, umläuft, wobei der Durchmesser des umlaufenden Stahlbandes durch eine Feststelleinrichtung, wie beispielsweise eine Schnalle, eingestellt werden kann.

Die Einsatzmöglichkeiten des Dichtungseinsatzes werden durch die mehreren inneren Dichtabschnitte unterschiedlichen Durchmessers erheblich erweitert. Ein und derselbe Dichtungseinsatz kann somit für die Abdichtung einer Ausnehmung gegenüber verschiedenen Leitungen eingesetzt werden. Da bei der Gebäudeabdichtung eine Vielzahl unterschiedlicher Leitungen gegenüber Ausnehmungen in Bewandungsabschnitten abgedichtet werden müssen, kommt es somit zu einer erheblichen Kosteneinsparung, da die Herstellung verschiedener Dichtungseinsätze nicht länger notwendig ist. Ferner wird das Risiko eines unsachgemäßen Einbaus beziehungsweise einer unsachgemäßen Montage des Dichtungseinsatzes verringert, da der zuständige Monteur nicht aus einer Vielzahl von unterschiedlichen Dichtungseinsatztypen einen geeigneten Dichtungseinsatz auswählen muss.

In einer weiteren bevorzugten Ausführungsform des erfindungsgemäßen Dichtungseinsatzes weisen die mehreren inneren Dichtabschnitte im Wesentlichen ringförmige Querschnitte unterschiedlichen Durchmessers auf und sind im Wesentlichen koaxial zueinander angeordnet.

In einer weiteren bevorzugten Ausführungsform des erfindungsgemäßen Dichtungseinsatzes weist der Dichtkörper, welcher den äußeren Dichtabschnitt trägt, eine oder mehrere umlaufende Erhebungen auf. Alternativ oder zusätzlich weist der Dichtkörper, welcher den inneren Dichtabschnitt trägt, eine oder mehrere umlaufende Erhebungen auf. Die umlaufenden Erhebungen sind vorzugsweise zur Führung einer Spanneinrichtung angepasst, beispielsweise zur Führung einer Verspannmanschette. Ferner können die umlaufenden Erhebungen dem zuständigen Monteur als Hinweis für die korrekte Positionierung einer Spanneinrichtung dienen.

Der erfindungsgemäße Dichtungseinsatz wird ferner dadurch vorteilhaft weitergebildet, dass die mehreren inneren Dichtabschnitte axial versetzt zueinander angeordnet sind. Durch den axialen Versatz der inneren Dichtabschnitte verringert sich der notwendige Verstellweg der zweiten Spanneinrichtung, da die zweite Spanneinrichtung direkt auf den Abschnitt des Dichtkörpers aufgesetzt werden kann, welcher den zur Abdichtung notwendigen inneren Dichtabschnitt trägt. Durch die axiale Beabstandung der inneren Dichtabschnitte sind die einzelnen Dichtabschnitte für den Monteur ferner auch leichter zugänglich, wodurch die Handhabung des Dichtungseinsatzes und dessen Montage vereinfacht ist.

In einer besonders bevorzugten Ausführungsform des erfindungsgemäßen Dichtungseinsatzes sind benachbarte innere Dichtabschnitte mit Stegabschnitten verbunden. Die Stegabschnitte, welche benachbarte innere Dichtabschnitte verbinden, sind vorzugsweise von außen zugänglich. Vorzugsweise sind die Stegabschnitte derart ausgebildet, sie durch Werkzeugeinsatz vom Monteur durchstochen werden können. Nachdem der Stegabschnitt an einer Stelle durchstochen wurde, kann der Stegabschnitt durch Zugkraftaufbringung auf einen oder mehrere herauszulösende innere Dichtabschnitte eingerissen werden. Spitze und gleichzeitig unscharfe Werkzeuge, wie beispielsweise Schraubendreher, sind zum Durchstechen der Stegabschnitte bevorzugt, da deren Verwendung nicht das Risiko eines unbeabsichtigten Einschneidens in einen Dichtabschnitt birgt. Vorzugsweise sind die Stegabschnitte derart ausgebildet, dass beim Knicken eines Stegabschnitts ein Riss innerhalb des geknickten Stegabschnitts hervorgerufen wird. Der Riss innerhalb des Stegabschnitts ist durch Zugkraftaufbringung auf einen oder mehrere herauszulösende innere Dichtabschnitte entlang des Stegabschnitts ausweitbar. Durch das Durchtrennen eines Stegabschnitts, welcher zwei benachbarte innere Dichtabschnitte miteinander verbindet, können somit ein oder mehrere Dichtabschnitte aus dem Dichtkörper herausgelöst werden. Auf diese Weise können innere Dichtabschnitte mit einem Durchmesser, welcher für die Abdichtung der abzudichtenden Leitung zu gering sind, aus dem Dichtkörper entfernt werden, sodass eine Abdichtung der abzudichtenden Leitung mit einem inneren Dichtabschnitt, welcher einen geeigneten Durchmesser aufweist, erfolgen kann.

In einer besonders bevorzugten Ausführungsform des erfindungsgemäßen Dichtungseinsatzes sind die Stegabschnitte derart ausgebildet, dass diese durch Zugkraftaufbringung direkt einreißbar sind. Auf diese Weise kann der Dichtungseinsatz auch ohne Werkzeugeinsatz schnell an die abzudichtende Leitung angepasst werden. Dadurch, dass die Stegabschnitte durch Zugkraftaufbringung einreißbar sind, wird der Einsatz von zusätzlichen Werkzeugen, wie Schraubendrehern, gänzlich vermieden. Somit ist die Anpassung des Dichtungseinsatzes an die abzudichtende Leitung weiter vereinfacht.

Vorzugsweise ist der Dichtkörper einteilig oder mehrteilig ausgebildet. Ist der Dichtkörper einteilig ausgebildet, trägt der einteilige Dichtkörper sowohl den inneren Dichtabschnitt als auch den äußeren Dichtabschnitt. Ist der Dichtkörper mehrteilig ausgebildet, trägt ein erstes Dichtkörperteil den inneren Dichtabschnitt und ein zweites separates Dichtkörperteil den äußeren Dichtabschnitt.

In einer besonders bevorzugten Ausführungsform des erfindungsgemäßen Dichtungseinsatzes ist der äußere Dichtabschnitt über einen flexiblen und längenveränderlichen Kompensatorabschnitt mit dem inneren Dichtabschnitt verbunden. Dadurch, dass der Kompensatorabschnitt flexibel und längenveränderlich ist, können Relativbewegungen der abgedichteten Leitung gegenüber der Ausnehmung ausgeglichen, d. h. kompensiert werden, ohne dass die Dichtwirkung des Dichtungseinsatzes beeinträchtigt wird. Vorzugsweise ermöglicht der Kompensatorabschnitt eine Relativbewegung zwischen dem äußeren Dichtabschnitt und dem inneren Dichtabschnitt in axialer Richtung und/oder in radialer Richtung, ohne dass die Dichtwirkung beeinträchtigt wird. Vorzugsweise ermöglicht der Kompensatorabschnitt eine Änderung des Anstellungswinkels zwischen dem äußeren Dichtabschnitt und dem inneren Dichtabschnitt, ohne dass die Dichtwirkung beeinträchtigt wird.

Der erfindungsgemäße Dichtungseinsatz wird ferner dadurch vorteilhaft weitergebildet, dass der Kompensatorabschnitt rotationssymmetrisch ausgebildet ist und eine einfach oder mehrfach gefaltete Membran umfasst. Vorzugsweise ist der Kompensatorabschnitt einstückig mit dem Dichtkörper ausgebildet, welcher den äußeren Dichtabschnitt und den inneren Dichtabschnitt trägt.

Ein weiterer Aspekt der Erfindung betrifft einen Dichtungseinsatz zum Abdichten einer Leitung gegenüber einer Ausnehmung in einem Wandabschnitt, mit einem äußeren Dichtabschnitt zum Abdichten gegen die Ausnehmung, einem inneren Dichtabschnitt zum Abdichten gegen die Leitung und einer Spanneinrichtung zum Verspannen des inneren Dichtabschnitts, wobei der äußere Dichtabschnitt zur Vermeidung einer Beeinflussung durch die Spanneinrichtung von dem inneren Dichtabschnitt entkoppelt ist und die Spanneinrichtung zwei relativ zueinander bewegbare Spannkörper zum Verspannen des inneren Dichtabschnitts aufweist, wobei ein Anschlag die Verspannung des inneren Dichtabschnitts begrenzt. Der Dichtungseinsatz weist vorzugsweise zusätzlich ein oder mehrere der vorstehend beschriebenen Merkmale auf.

Ausführungsbeispiele der Erfindung werden nun nachfolgend anhand der Figuren beschrieben. Diese sollen die Ausführungsbeispiele nicht notwendigerweise maßstäblich darstellen, vielmehr sind die Zeichnungen in schematischer Form ausgeführt. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenständen. Weitere Vorteile, Merkmale und Einzelheiten der Erfindung ergeben sich aus der nachfolgenden Beschreibung der bevorzugten Ausführungsformen sowie anhand der folgenden Figuren. Im Einzelnen zeigen:
Fig. 1 ein Ausführungsbeispiel des erfindungsgemäßen Dichtungseinsatzes in einer Schnittdarstellung;
Fig. 2 ein weiteres Ausführungsbeispiel des erfindungsgemäßen Dichtungseinsatzes in einer Schnittdarstellung;
Fig. 3 den Dichtungseinsatz aus Fig. 2 in einer weiteren Schnittdarstellung;
Fig. 4 ein weiteres Ausführungsbeispiel des erfindungsgemäßen Dichtungseinsatzes in einer perspektivischen Darstellung;
Fig. 5a den Dichtungseinsatz aus Fig. 4 in einer Schnittdarstellung;
Fig. 5b einen vergrößerten Ausschnitt aus Fig. 5a;
Fig. 6a ein weiteres Ausführungsbeispiel des erfindungsgemäßen Dichtungseinsatzes in einer Schnittdarstellung;
Fig. 6b einen vergrößerten Ausschnitt aus Fig. 6a; und
Fig. 7 Teile eines erfindungsgemäßen Dichtungseinsatzes, insbesondere Mehrfach-Dichtungseinsatzes, in einer perspektivischen Darstellung.

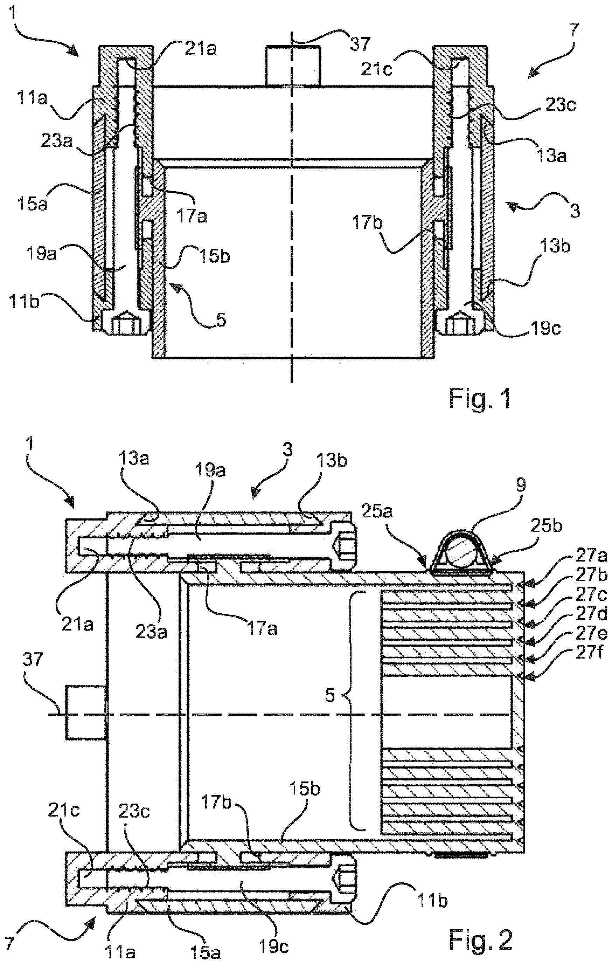

Fig. 1 zeigt einen Dichtungseinsatz 1 zum Abdichten einer Leitung gegenüber einer Ausnehmung in einem Wandabschnitt. Der Dichtungseinsatz 1 umfasst einen äußeren Dichtabschnitt 3 zum Abdichten gegen die Ausnehmung und einen inneren Dichtabschnitt 5 zum Abdichten gegen die Leitung. Ferner weist der Dichtungseinsatz 1 eine erste Spanneinrichtung 7 zum Verspannen des äußeren Dichtabschnitts 3 auf. Der innere Dichtabschnitt 5 ist zur Vermeidung einer Beeinflussung durch die erste Spanneinrichtung 7 von dem äußeren Dichtabschnitt 3 entkoppelt. Die erste Spanneinrichtung 7 weist zwei relativ zueinander bewegbare Spannkörper 11a, 11b zum Verspannen des äußeren Dichtabschnitts 3 auf. Ferner begrenzt ein Anschlag die Verspannung des äußeren Dichtabschnitts 3. Der äußere Dichtabschnitt 3 und der innere Dichtabschnitt 5 weisen jeweils eine zylindrische Dichtfläche auf, welche koaxial zu einer zentralen Mittelachse 37 ausgebildet ist.

Die Spannkörper 11a, 11b der ersten Spanneinrichtung 7 weisen jeweils eine Pressfläche 13a, 13b auf. Die Pressflächen 13a, 13b sind relativ zueinander bewegbar, wobei zwischen den Pressflächen 13a, 13b ein zweiteiliger formveränderlicher Dichtkörper 15a,b angeordnet ist, Ein erstes Dichtkörperteil 15a trägt den äußeren Dichtabschnitt. Ein zweites Dichtkörperteil 15b trägt den inneren Dichtabschnitt. Der formveränderliche Dichtkörper 15a,b ist aus einem Elastomermaterial ausgebildet. Die bewegbaren Spannkörper 11a, 11b der ersten Spanneinrichtung 7 sind aus einem formstabilen Kunststoff ausgebildet.

Die Spannkörper 11a, 11b der ersten Spanneinrichtung 7 weisen jeweils eine Anschlagsfläche 17a, 17b auf, wobei die Anschlagsflächen 17a, 17b relativ zueinander bewegbar sind. Die Anschlagsflächen 17a, 17b schlagen in einer Anschlagsposition an Dichtkörperteil 15b an. Optional ist das Dichtkörperteil 15a mit dem Dichtkörperteil 15b verbunden, etwa durch eine flexible Membran.

Dadurch, dass die Anschlagsflächen 17a, 17b und die Pressflächen 13a, 13b als Oberflächenabschnitte der jeweils einstückig ausgebildeten Spannkörper 11a, 11b der ersten Spanneinrichtung 7 ausgebildet sind, führt eine Relativbewegung der Pressflächen 13a, 13b gleichzeitig zu einer Relativbewegung der Anschlagsflächen 17a, 17b.

Alternativ oder zusätzlich zu dem Anschlag der Anschlagsflächen 17a, 17b an dem Dichtkörperteil 15b ist ein weiterer Anschlag auch durch die vier bewegbaren Anschlagskörper 19a, 19c realisierbar. Bei einer entsprechenden Ausbildung des Dichtungseinsatzes 1 schlagen die Anschlagskörper 19a, 19c jeweils in einer Anschlagsposition an einer Anschlagsfläche 21a, 21c an. Die Anschlagskörper 19a, 19c sind als Schrauben ausgebildet und erstrecken sich durch eine Durchgangsbohrung des unteren Spannkörpers 11b und greifen jeweils in eine Gewindebohrung 23a, 23c in dem oberen Spannkörper 11a. Die Gewindebohrungen 23a, 23c weisen ein Sackloch auf, wobei der Grund des Sacklochs als Anschlagsfläche 21a, 21c für die jeweiligen Anschlagskörper 19a, 19c ausgebildet ist.

Die Pressflächen 13a, 13b der Spannkörper 11a, 11b der ersten Spanneinrichtung 7 sind mit den Anschlagskörpern 19a, 19c wirkverbunden, sodass eine Bewegung, nämlich eine Rotation der Anschlagskörper 19, 19c eine Relativbewegung der Pressflächen 13a, 13b der Spannkörper 11a, 11b der ersten Spanneinrichtung 7 verursacht. Eine Rotationsbewegung der Anschlagskörper 19a, 19c führt folglich entweder zu einer Annäherung der Spannkörper 11a, 11b der ersten Spanneinrichtung 7 oder zu einer Vergrößerung des Abstands zwischen den Spannkörpern 11a, 11b der ersten Spanneinrichtung 7.

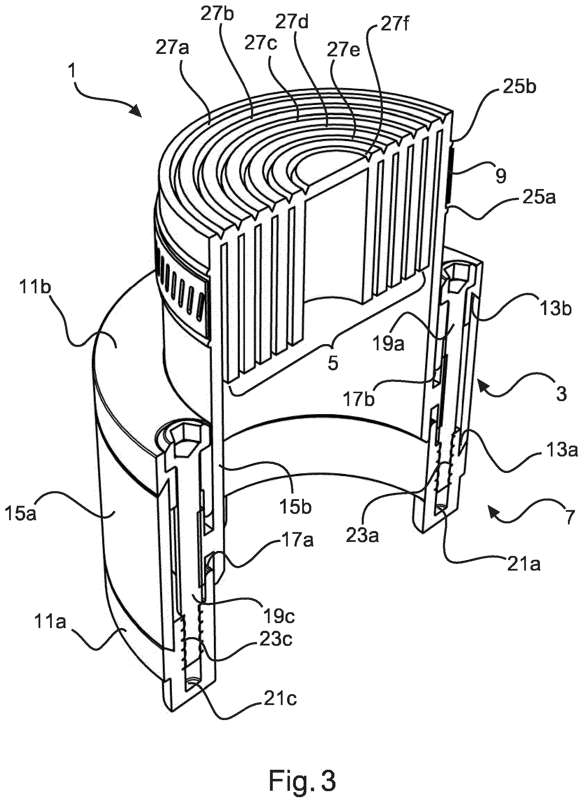

Fig. 2 und 3 zeigen einen Dichtungseinsatz 1, welcher zusätzlich zu den Merkmalen des Dichtungseinsatzes 1 aus Fig. 1 eine zweite Spanneinrichtung 9 und mehrere Dichtabschnitte 5 auf. Der äußere Dichtabschnitt 3 ist zur Vermeidung einer Beeinflussung durch die zweite Spanneinrichtung 9 von den inneren Dichtabschnitten entkoppelt. Die zweite Spanneinrichtung 9 weist eine Verspannmanschette auf, mittels welcher einer der inneren Dichtabschnitte 5 fluiddicht mit einer Leitung verspannbar ist.

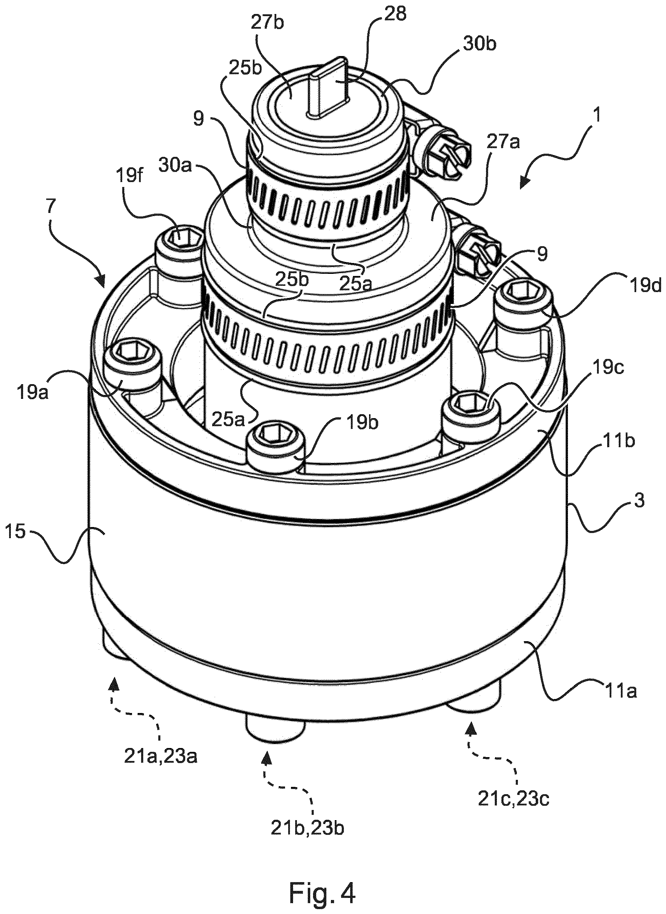

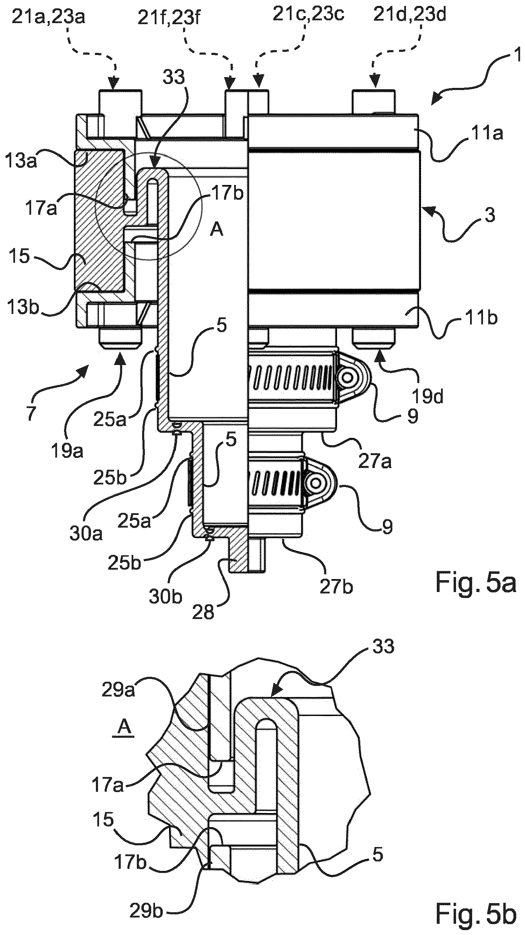

Die mehreren inneren Dichtabschnitte 5 sind zum Abdichten gegen Leitungen unterschiedlichen Durchmessers ausgebildet, weisen jeweils einen im Wesentlichen ringförmigen Querschnitt auf und sind koaxial zueinander und zu einer zentralen Mittelachse 37 angeordnet. Benachbarte innere Dichtabschnitte 5 sind mit Stegabschnitten 27a bis 27f miteinander verbunden. Die Stegabschnitte 27a bis 27f sind mittels eines Werkzeugs, wie beispielsweise einem Schraubendreher, durchstechbar anschließend durch Zugkraftbeaufschlagung einreißbar. Der Dichtkörper 15 weist in dem Bereich, welcher den äußersten inneren Dichtabschnitt 5 trägt, zwei voneinander beabstandete umlaufende Erhebungen 25a, 25b auf. Die umlaufenden Erhebungen 25a, 25b dienen zur Führung der zweiten Spanneinrichtung 9.Gemäß Fig. 4 und 5a,b weist der erfindungsgemäße Dichtungseinsatz 1 einen äußeren Dichtabschnitt 3 zum Abdichten gegen eine Ausnehmung und zwei innere Dichtabschnitte 5 unterschiedlichen Durchmessers zum Abdichten gegen Leitungen unterschiedlichen Durchmessers auf. Ferner umfasst der Dichtungseinsatz 1 eine erste Spanneinrichtung 7 zum Verspannen des äußeren Dichtabschnitts 3, wobei die inneren Dichtabschnitte 5 zur Vermeidung einer Beeinflussung durch die erste Spanneinrichtung 7 von dem äußeren Dichtabschnitt 3 entkoppelt sind. Die erste Spanneinrichtung 7 weist zwei relativ zueinander bewegbare Spannkörper 11a, 11b zum Verspannen des äußeren Dichtabschnitts 3 auf, wobei ein Anschlag die Verspannung des äußeren Dichtabschnitts 3 begrenzt.

Die Spannkörper 11a, 11b der ersten Spanneinrichtung 7 weisen jeweils eine Pressfläche 13a, 13b auf, wobei die Pressflächen 13a, 13b relativ zueinander bewegbar sind und zwischen den Pressflächen 13a, 13b ein formveränderlicher Dichtkörper 15 aus einem Elastomermaterial angeordnet ist, welcher den äußeren Dichtabschnitt 3 trägt. Die Spannkörper 11a, 11b der ersten Spanneinrichtung 7 weisen wiederum jeweils eine Anschlagsfläche 17a, 17b auf, wobei die Anschlagsflächen 17a, 17b relativ zueinander bewegbar sind und in einer Anschlagsposition an dem Dichtkörper 15 anschlagen. Der erste Spannkörper 11a weist sechs Gewindebohrungen 23a bis 23f auf, welche dazu eingerichtet sind, mit Gewindeabschnitten von jeweils sechs Anschlagskörpern 19a bis 19f zusammenzuwirken. Die Anschlagskörper 19a bis 19f weisen jeweils einen Gewindeabschnitt auf, welcher in eine Gewindebohrung 23a bis 23f einschraubbar ist.

Eine Rotationsbewegung der Anschlagskörper 19a bis 19f führt durch das Zusammenwirken mit den Spannkörpern 11a, 11b der ersten Spanneinrichtung 7 zu einer Relativbewegung der Pressflächen 13a, 13b und zu einer Relativbewegung der Anschlagsflächen 17a, 17b der Spannkörper 11a, 11b der ersten Spanneinrichtung 7.

Die Anschlagskörper 19a bis 19f sind als Schrauben ausgeführt, welche in Richtung der mehreren inneren Dichtabschnitte aus dem Spannkörper 11b herausragen. Der Spannkörper 11b weist zur Aufnahme der Anschlagskörper 19a bis 19f sechs Durchgangsbohrungen auf.

Die zwei inneren Dichtabschnitte 5 sind jeweils mittels einer zweiten Spanneinrichtung 9 fluiddicht mit einer Leitung verspannbar. Die zwei inneren Dichtabschnitte 5 weisen ringförmige Querschnitte unterschiedlichen Durchmessers auf und sind koaxial zueinander angeordnet. Der Dichtkörper 15 weist in den Bereichen der inneren Dichtabschnitte 5 jeweils zwei umlaufende Erhebungen 25a, 25b auf. Die umlaufenden Erhebungen 25a, 25b dienen zur Ausrichtung der zweiten Spanneinrichtung 9.

Die zwei inneren Dichtabschnitte 5 sind axial versetzt zueinander angeordnet. Außerdem sind die zwei Dichtabschnitte mit einem ersten Stegabschnitt 27a miteinander verbunden. Ein zweiter Stegabschnitt 27b bildet einen Blinddeckel aus. Der erste Stegabschnitt 27a und der zweite Steg 27b sind jeweils mittels Sollbruchstellen 30a,b mittels eines Werkzeugs, wie beispielsweise einem Schraubendreher, durchstechbar und anschließend durch Zugkraftaufbringung einreißbar. An den zweiten Steg 27b ist ein Griff 28 angeformt, welcher zum Entfernen des Blinddeckels manuell greifbar ist.

Gemäß Fig. 5a und Fig. 5b weist der Dichtungseinsatz 1 einen äußeren Dichtabschnitt 3 zum Abdichten gegen eine Ausnehmung und zwei innere Dichtabschnitte 5 zum Abdichten gegen Leitungen unterschiedlichen Durchmessers auf.

Der Dichtungseinsatz 1 umfasst ferner eine erste Spanneinrichtung 7 zum Verspannen des äußeren Dichtabschnitts 3, wobei die inneren Dichtabschnitte 5 zur Vermeidung einer Beeinflussung durch die erste Spanneinrichtung 7 von dem äußeren Dichtabschnitt 3 entkoppelt sind. Die erste Spanneinrichtung 7 weist zwei relativ zueinander bewegbare Spannkörper 11a, 11b zum Verspannen des äußeren Dichtabschnitts 3 auf.

Beide Spannkörper 11a, 11b der ersten Spanneinrichtung 7 weisen eine Stützfläche 29a, 29b, 31a, 31b auf, welche den Dichtkörper 15 in radialer Richtung nach innen abstützt. Die Stützflächen 29a, 29b, 31a, 31b der beiden Spannkörper 11a, 11b umfassen jeweils einen parallel zu dem äußeren Dichtabschnitt 3 verlaufenden Stützabschnitt (bei Bezugszeichen 29a, 29b).

Der äußere Dichtabschnitt 3 ist über einen flexiblen und längenveränderlichen Kompensatorabschnitt 33 mit den inneren Dichtabschnitten 5 verbunden. Der Kompensatorabschnitt 33 ist rotationssymmetrisch ausgebildet und umfasst eine zweifach gefaltete Membran.

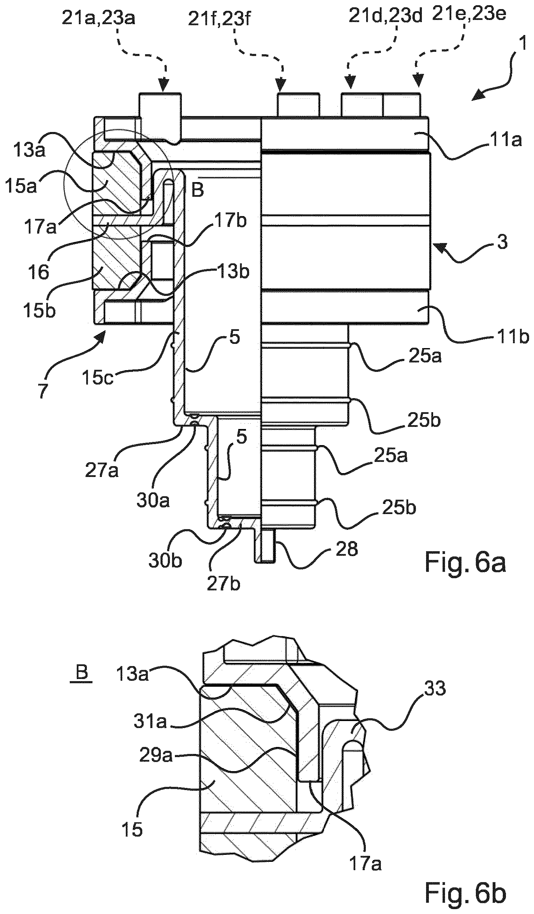

Gemäß Fig. 6a und Fig. 6b weist der Dichtungseinsatz 1 zwei innere Dichtabschnitte 5 auf, welche axial versetzt zueinander angeordnet sind. Die Dichtabschnitte 5 sind über einen Stegabschnitt 27a miteinander verbunden. Ein zweiter Stegabschnitt 27b verschließt als Blinddeckel den kleinsten der inneren Dichtabschnitte 5. Der Stegabschnitt 27a, 27b wird vorzugsweise mittels Einstecken und Einreißen entlang einer Sollbruchstelle 30a,b mittels eines Werkzeugs, wie beispielsweise einem Schraubendreher, entfernt.

Der Dichtkörper 15 ist mehrteilig, insbesondere dreiteilig ausgebildet, wobei ein erstes Dichtkörperteil 15a und ein zweites Dichtkörperteil 15b den äußeren Dichtabschnitt 3 tragen und ein drittes Dichtkörperteil 15a die inneren Dichtabschnitte 5 aufweist.. Das dritte Dichtkörperteil 15c ist mit einem Flanschabschnitt 16 zwischen dem ersten und zweiten Dichtkörperteil 15a, 15b eingeklemmt und mittels der Spannkörper 11a, 11b zwischen dem ersten und zweiten Dichtkörperteil 15a,b verspannt.

Beide Spannkörper 11a, 11b der ersten Spanneinrichtung 7 weisen eine Stützfläche auf, welche das erste und zweite Dichtkörperteil 15a,b in radialer Richtung nach innen abstützt. Die Stützflächen 29a, b; 31a, b der beiden Spannkörper 11a, 11b umfassen jeweils einen parallel zu dem äußeren Dichtabschnitt 3 verlaufenden Stützabschnitt (bei Bezugszeichen 29a, 29b) und einen geneigt zu dem äußeren Dichtabschnitt 3 verlaufenden Stützabschnitt (bei Bezugszeichen 31a, 31b).

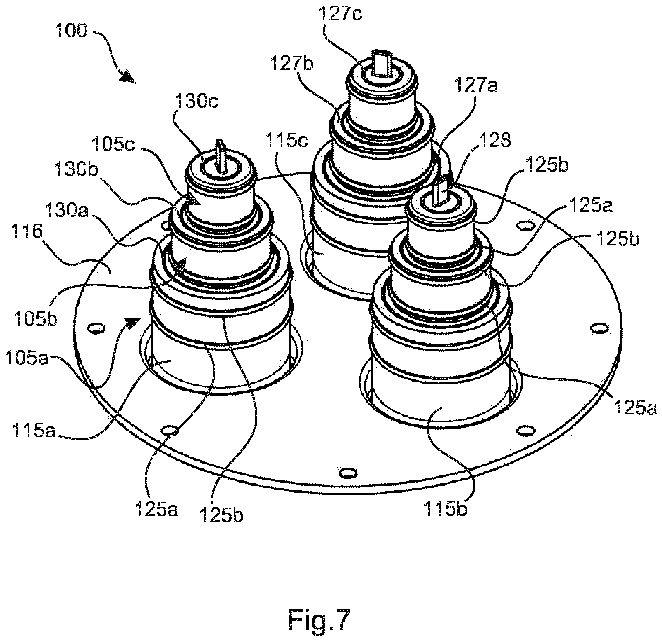

Während die Ausführungsformen der Figuren 1 bis 6b auf Einfach-Dichtungseinsätze gerichtet waren, zeigt Figur 7 beispielhaft die Anwendung des erfindungsgemäßen Konzepts auf Mehrfach-Dichtungseinsätze. Für einen Mehrfach-Dichtungseinsatz 100 steht als erste Spanneinrichtung beispielsweise eine Spanneinrichtung 7 gemäß den Figuren 6a,b zur Verfügung.

Anstelle von einem einzelnen weiteren Dichtkörperteil sind in diesem Ausführungsbeispiel allerdings an einem gemeinsamen Flanschabschnitt 116 zur Montage an der Spanneinrichtung drei weitere Dichtkörperteile 115a,b,c ausgebildet. Somit ist ein Dichtungseinsatz 100 zum Durchführen mehrerer Leitungen gleichzeitig eingerichtet. Jeder der weiteren Dichtkörperteile 115a-c ist vorzugsweise analog zu dem Ausführungsbeispiel gemäß Figur 6a ausgebildet. Alternativ ist beziehungsweise sind eines oder mehrere oder sämtliche der Dichtkörperteile 115a-c beispielsweise gemäß dem Ausführungsbeispiel nach Figur 2, 3 ausgebildet (nicht gezeigt).

Die Dichtkörperteile 115a-c weisen im Bereich ihrer inneren Dichtabschnitte 105 jeweils zwei umlaufende Erhebungen 125a,b auf, die zur Ausrichtung etwaiger außen montierbarer Spanneinrichtungen dienen. Die Dichtkörperteile 115a-c weisen jeweils mehrere Dichtabschnitte 105a-c auf, die jeweils über Stegabschnitte 127a,b,c miteinander verbunden sind. Der an dem kleinsten, dritten Dichtabschnitt 105c angeordnete Stegabschnitt 127c dient als Blinddeckel. Die Stegabschnitte 127a-c sind mittels eins Werkzeugs, beispielsweise eines Schraubendrehers, vorzugsweise an einer jeweiligen Sollbruchstelle 130a-c durchstechbar und anschließend durch Zugkraftaufbringung einreißbar. An dem dritten Steg 127c ist ein Griff 128 angeformt, welcher zum Entfernen des Blinddeckels manuell greifbar ist.

### Bezugszeichen

- 1: Dichtungseinsatz
- 3: äußerer Dichtabschnitt
- 5: innerer Dichtabschnitt
- 7: erste Spanneinrichtung
- 9: zweite Spanneinrichtung
- 11a, 11b: Spannkörper der ersten Spanneinrichtung
- 13a, 13b: Pressflächen der Spannkörper
- 15, 15a, 15b, 15c: Dichtkörper
- 16: Flanschabschnitt
- 17a, 17b: Anschlagsflächen
- 19a -19f: Anschlagskörper
- 21a - 21f: Anschlagsflächen
- 23a - 23f: Gewindebohrungen
- 25a, 25b: Erhebungen
- 27a- 27f: Stegabschnitte
- 28: Griff
- 29a, 29b: Stützflächen
- 30a,b: Sollbruchstelle
- 31a, 31b: Stützflächen
- 33: Kompensatorabschnitt
- 37: zentrale Mittelachse
- 100: Mehrfach-Dichtungseinsatz
- 105a-c: Dichtabschnitte
- 115a-c: Dichtkörper, Dichtkörperteil
- 116: Flanschabschnitt
- 125a,b: Erhebungen
- 127a-c: Stegabschnitte
- 128: Griff
- 130a-c: Sollbruchstelle

## Patentansprüche

1. Dichtungseinsatz (1, 100) zum Abdichten einer Leitung gegenüber einer Ausnehmung in einem Wandabschnitt einer Gebäudewandung, mit
- einem äußeren Dichtabschnitt (3), welcher von einem formveränderlichen Dichtkörper (15) getragen wird und eine zylinderförmige äußere Mantelfläche aufweist, und zum Abdichten gegen die Ausnehmung eingerichtet ist,
- mindestens einem inneren Dichtabschnitt (5, 105a-c) zum Abdichten gegen die Leitung, und
- einer ersten Spanneinrichtung (7) zum Verspannen des äußeren Dichtabschnitts (3), wobei die erste Spanneinrichtung (7) zwei relativ zueinander bewegbare Spannkörper (11a, 11b) zum Verspannen des äußeren Dichtabschnitts (3) aufweist, wobei sich der Dichtkörper (15) und die äußere Mantelfläche radial nach außen ausdehnen, und wobei ein Anschlag die Verspannung des äußeren Dichtabschnitts (3) mit seiner Mantelfläche begrenzt, **dadurch gekennzeichnet, dass** der mindestens eine innere Dichtabschnitt (5, 105a-c) zur Vermeidung einer Beeinflussung durch die erste Spanneinrichtung (7) von dem äußeren Dichtabschnitt (3) mit seiner Mantelfläche entkoppelt ist.

2. Dichtungseinsatz (1) nach Anspruch 1,
**gekennzeichnet durch** eine zweite Spanneinrichtung (9) zum Verspannen des inneren Dichtabschnitts (5), wobei der äußere Dichtabschnitt (3) zur Vermeidung einer Beeinflussung durch die zweite Spanneinrichtung (9) von dem inneren Dichtabschnitt (5) entkoppelt ist.

3. Dichtungseinsatz (1) nach einem der vorstehenden Ansprüche,
**dadurch gekennzeichnet, dass** die Spannkörper (11a, 11b) der ersten Spanneinrichtung (7) jeweils eine Pressfläche (13a, 13b) aufweisen, wobei die Pressflächen (13a, 13b) relativ zueinander bewegbar sind und zwischen den Pressflächen (13a, 13b) der formveränderliche Dichtkörper (15c; 15a,b; 15a,b,c) ausgebildet ist, welcher den äußeren Dichtabschnitt (3) trägt.

4. Dichtungseinsatz (1) nach Anspruch 3,
**dadurch gekennzeichnet, dass** die Spannkörper (11a, 11b) der ersten Spanneinrichtung (7) jeweils eine Anschlagsfläche (17a, 17b) aufweisen, wobei die Anschlagsflächen (17a, 17b) relativ zueinander bewegbar sind und in einer Anschlagsposition aneinander oder an dem Dichtkörper (15c; 15a,b; 15a,b,c) anschlagen.

5. Dichtungseinsatz (1) nach Anspruch 3 oder 4,
**dadurch gekennzeichnet, dass** zumindest ein Spannkörper (11a, 11b), vorzugsweise beide Spannkörper (11a, 11b) der ersten Spanneinrichtung (7) eine Stützfläche (29a, 29b) aufweist, welche den Dichtkörper (15) in radialer Richtung nach innen abstützt.

6. Dichtungseinsatz (1) nach Anspruch 5,
**dadurch gekennzeichnet, dass** die Stützfläche (29a, 29b, 31a, 31b) einen parallel zu dem äußeren Dichtabschnitt (3) verlaufenden Stützabschnitt und/oder einen geneigt zu dem äußeren Dichtabschnitt verlaufenden Stützabschnitt (31a, 31b) umfasst.

7. Dichtungseinsatz (1) nach einem der vorstehenden Ansprüche,
**gekennzeichnet durch** einen oder mehrere bewegbare Anschlagskörper (19a -19f), welche jeweils in einer Anschlagsposition an einer Anschlagsfläche (21a - 21f) anschlagen, wobei bevorzugt der Anschlag der ersten Spanneinrichtung (7) einstellbar ist.

8. Dichtungseinsatz (1) nach Anspruch 7,
**dadurch gekennzeichnet, dass** die Pressflächen (13a, 13b) der Spannkörper (11a, 11b) der ersten Spanneinrichtung (7) mit dem einen oder den mehreren Anschlagskörpern (19a -19f) wirkverbunden sind, sodass eine Bewegung des einen oder der mehreren Anschlagskörper (19a -19f) eine Relativbewegung der Pressflächen (13a, 13b) der Spannkörper (11a, 11b) der ersten Spanneinrichtung (7) verursacht.

9. Dichtungseinsatz (1) nach Anspruch 8,
**dadurch gekennzeichnet, dass** ein Spannkörper (11a, 11b) der ersten Spanneinrichtung (7) eine oder mehrere Gewindebohrungen (23a - 23f) aufweist und der eine oder die mehreren Anschlagskörper (19a -19f) jeweils einen Gewindeabschnitt umfassen, welcher mit einer der Gewindebohrungen (23a - 23f) verschraubbar ist.

10. Dichtungseinsatz (1) nach Anspruch 9,
**dadurch gekennzeichnet, dass** die eine oder die mehreren Gewindebohrungen (23a - 23f) jeweils ein Sackloch aufweisen, wobei der Grund des Sacklochs als Anschlagsfläche (21a - 21f) für einen Anschlagskörper (19a -19f) ausgebildet ist.

11. Dichtungseinsatz (1) nach einem der vorstehenden Ansprüche,
**dadurch gekennzeichnet, dass** der Dichtkörper (15), welcher den äußeren Dichtabschnitt trägt, eine oder mehrere umlaufende Erhebungen aufweist.

12. Dichtungseinsatz (1) nach einem der vorstehenden Ansprüche,
**gekennzeichnet durch** mehrere innere Dichtabschnitte (5) zum Abdichten gegen Leitungen unterschiedlichen Durchmessers, wobei einer der mehreren inneren Dichtabschnitte (5) vorzugsweise mittels der zweiten Spanneinrichtung (9) fluiddicht mit einer Leitung verspannbar ist.

13. Dichtungseinsatz (1) nach Anspruch 12,
**dadurch gekennzeichnet, dass** die mehreren inneren Dichtabschnitte (5) im Wesentlichen ringförmige Querschnitte unterschiedlichen Durchmessers aufweisen und im Wesentlichen koaxial angeordnet sind.

14. Dichtungseinsatz (1) nach einem der Ansprüche 12 oder 13,
**dadurch gekennzeichnet, dass** die mehreren inneren Dichtabschnitte (5) axial versetzt zueinander angeordnet sind.

15. Dichtungseinsatz (1) nach einem der Ansprüche 12 bis 14,
**dadurch gekennzeichnet, dass** benachbarte innere Dichtabschnitte (5) mit Stegabschnitten (27a - 27f) verbunden sind.

16. Dichtungseinsatz (1) nach einem der vorstehenden Ansprüche,
**dadurch gekennzeichnet, dass** der äußere Dichtabschnitt (3) über einen flexiblen und längenveränderlichen Kompensatorabschnitt (33) mit dem inneren Dichtabschnitt (5) verbunden ist.

17. Dichtungseinsatz (1) nach Anspruch 16,
**dadurch gekennzeichnet, dass** Kompensatorabschnitt (33) rotationssymmetrisch ausgebildet ist und eine einfach oder mehrfach gefaltete Membran umfasst.

## Claims

1. Seal insert (1, 100) for sealing a line with respect to a recess in a wall portion of a building wall, having
- an outer sealing portion (3) which is carried by a shape-variable sealing member (15) and which has a cylindrical outer covering face and which is configured for sealing with respect to the recess,
- at least one inner sealing portion (5, 105a-c) for sealing with respect to the line, and
- a first clamping device (7) for clamping the outer sealing portion (3), wherein the first clamping device (7) has two clamping members (11a, 11b) which can be moved relative to each other for clamping the outer sealing portion (3), wherein the sealing member (15) and the outer covering face expand radially outwards, and wherein a stop limits the clamping of the outer sealing portion (3) with the covering face thereof,
**characterised in that** the at least one inner sealing portion (5, 105a-c) is decoupled from the outer sealing portion (3) with the covering face thereof in order to prevent being influenced by the first clamping device (7).

2. Seal insert (1) according to claim 1,
**characterised by** a second clamping device (9) for clamping the inner sealing portion (5), wherein the outer sealing portion (3) is decoupled from the inner sealing portion (5) in order to prevent being influenced by the second clamping device (9).

3. Seal insert (1) according to either of the preceding claims,
**characterised in that** the clamping members (11a, 11b) of the first clamping device (7) each have a pressing face (13a, 13b), wherein the pressing faces (13a, 13b) can be moved relative to each other and the shape-variable sealing member (15c; 15a,b; 15a,b,c) which carries the outer sealing portion (3) is formed between the pressing faces (13a, 13b).

4. Seal insert (1) according to claim 3,
**characterised in that** the clamping members (11a, 11b) of the first clamping device (7) each have a stop face (17a, 17b), wherein the stop faces (17a, 17b) can be moved relative to each other and in a stop position strike each other or the sealing member (15c; 15a,b; 15a,b,c).

5. Seal insert (1) according to claim 3 or 4,
**characterised in that** at least one clamping member (11a, 11b), preferably both clamping members (11a, 11b), of the first clamping device (7) has/have a support face (29a, 29b) which inwardly supports the sealing member (15) in a radial direction.

6. Seal insert (1) according to claim 5,
**characterised in that** the support face (29a, 29b, 31a, 31b) comprises a support portion which extends parallel with the outer sealing portion (3) and/or a support portion (31a, 31b) which extends in an inclined manner relative to the outer sealing portion.

7. Seal insert (1) according to any one of the preceding claims,
**characterised by** one or more movable stop members (19a-19f) which each strike a stop face (21a-21f) in a stop position, wherein the stop of the first clamping device (7) is preferably adjustable.

8. Seal insert (1) according to claim 7,
**characterised in that** the pressing faces (13a, 13b) of the clamping members (11a, 11b) of the first clamping device (7) are operationally connected to the one or more stop members (19a-19f) so that a movement of the one or more stop member(s) (19a-19f) brings about a relative movement of the pressing faces (13a, 13b) of the clamping members (11a, 11b) of the first clamping device (7) .

9. Seal insert (1) according to claim 8,
**characterised in that** a clamping member (11a, 11b) of the first clamping device (7) has one or more threaded holes (23a-23f) and the one or more stop member(s) (19a-19f) each comprise a threaded portion which can be screwed to one of the threaded holes (23a-23f).

10. Seal insert (1) according to claim 9,
**characterised in that** the one or more threaded holes (23a-23f) each have a blind hole, wherein the base of the blind hole is constructed as a stop face (21a-21f) for a stop member (19a-19f).

11. Seal insert (1) according to any one of the preceding claims,
**characterised in that** the sealing member (15) which carries the outer sealing portion has one or more peripheral projections.

12. Seal insert (1) according to any one of the preceding claims,
**characterised by** a plurality of inner sealing portions (5) for sealing against lines of different diameters, wherein one of the plurality of inner sealing portions (5) can preferably be clamped to a line in a fluid-tight manner by means of the second clamping device (9).

13. Seal insert (1) according to claim 12,
**characterised in that** the plurality of inner sealing portions (5) have substantially annular cross-sections of different diameters and are arranged in a substantially coaxial manner.

14. Seal insert (1) according to either claim 12 or claim 13,
**characterised in that** the plurality of inner sealing portions (5) are arranged to be axially offset with respect to each other.

15. Seal insert (1) according to any one of claims 12 to 14,
**characterised in that** adjacent inner sealing portions (5) are connected to web portions (27a-27f).

16. Seal insert (1) according to any one of the preceding claims,
**characterised in that** the outer sealing portion (3) is connected to the inner sealing portion (5) by means of a flexible compensator portion (33) which can be changed in terms of length.

17. Seal insert (1) according to claim 16,
**characterised in that** the compensator portion (33) is constructed in a rotationally symmetrical manner and comprises a membrane which is folded once or several times.

## Revendications

1. Insert d'étanchéité (1, 100) pour étanchéifier un conduit par rapport à un évidement dans une section de mur d'une cloison de bâtiment, avec
- une section étanche extérieure (3), laquelle est supportée par un corps étanche (15) à forme variable et présente une surface enveloppante extérieure en forme de cylindre et est mise au point aux fins de l'étanchéification par rapport à l'évidement,
- au moins une section étanche intérieure (5, 105a-c) pour l'étanchéification par rapport au conduit, et
- un premier dispositif de serrage (7) pour assembler par serrage la section étanche extérieure (3), dans lequel le premier dispositif de serrage (7) présente deux corps de serrage (11a, 11b) pouvant être déplacés l'un par rapport à l'autre pour assembler par serrage la section étanche extérieure (3), dans lequel le corps étanche (15) et la surface enveloppante extérieure s'étendent radialement vers l'extérieur, et dans lequel une butée délimite l'assemblage par serrage de la section étanche extérieure (3) avec sa surface enveloppante,
**caractérisé en ce que** l'au moins une section étanche intérieure (5, 105a-c) est découplée de la section étanche extérieure (3) avec sa surface enveloppante pour éviter une incidence exercée par le premier dispositif de serrage (7).

2. Insert d'étanchéité (1) selon la revendication 1,
**caractérisé par** un deuxième dispositif de serrage (9) pour assembler par serrage la section étanche intérieure (5), dans lequel la section étanche extérieure (3) est découplée de la section étanche intérieure (5) pour éviter une incidence exercée par le deuxième dispositif de serrage (9).

3. Insert d'étanchéité (1) selon l'une quelconque des revendications précédentes,
**caractérisé en ce que** les corps de serrage (11a, 11b) du premier dispositif de serrage (7) présentent respectivement une surface de pression (13a, 13b), dans lequel les surfaces de pression (13a, 13b) peuvent être déplacées l'une par rapport à l'autre et le corps étanche (15c ; 15a, b ; 15a, b, c) à forme variable est réalisé entre les surfaces de pression (13a, 13b), lequel supporte la section étanche extérieure (3).

4. Insert d'étanchéité (1) selon la revendication 3,
**caractérisé en ce que** les corps de serrage (11a, 11b) du premier dispositif de serrage (7) présentent respectivement une surface de butée (17a, 17b), dans lequel les surfaces de butée (17a, 17b) peuvent être déplacées l'une par rapport à l'autre et viennent buter l'une au niveau de l'autre ou au niveau du corps étanche (15c ; 15a, b ; 15a, b, c) dans une position de butée.

5. Insert d'étanchéité (1) selon la revendication 3 ou 4,
**caractérisé en ce qu'**au moins un corps de serrage (11a, 11b), de préférence les deux corps de serrage (11a, 11b) du premier dispositif de serrage (7), présente une surface d'appui (29a, 29b), laquelle soutient le corps étanche (15) dans une direction radiale vers l'intérieur.

6. Insert d'étanchéité (1) selon la revendication 5,
**caractérisé en ce que** la surface d'appui (29a, 29b, 31a, 31b) comprend une section d'appui s'étendant de manière parallèle par rapport à la section étanche extérieure (3) et/ou une section d'appui (31a, 31b) s'étendant de manière inclinée par rapport à la section étanche extérieure.

7. Insert d'étanchéité (1) selon l'une quelconque des revendications précédentes,
**caractérisé par** un ou plusieurs corps de butée (19a - 19f) pouvant être déplacés, lesquels viennent buter au niveau d'une surface de butée (21a - 21f) respectivement dans une position de butée, dans lequel de manière préférée la butée du premier dispositif de serrage (7) peut être réglée.

8. Insert d'étanchéité (1) selon la revendication 7,
**caractérisé en ce que** les surfaces de pression (13a, 13b) des corps de serrage (11a, 11b) du premier dispositif de serrage (7) coopèrent avec le ou les plusieurs corps de butée (19a - 19f) de sorte qu'un déplacement du ou des plusieurs corps de butée (19a - 19f) entraîne un déplacement relatif des surfaces de pression (13a, 13b) des corps de serrage (11a, 11b) du premier dispositif de serrage (7).

9. Insert d'étanchéité (1) selon la revendication 8,
**caractérisé en ce qu'**un corps de serrage (11a, 11b) du premier dispositif de serrage (7) présente un ou plusieurs alésages filetés (23a - 23f) et le ou les plusieurs corps de butée (19a - 19f) comprennent respectivement une section filetée, laquelle peut être vissée à un des alésages filetés (23a - 23f).

10. Insert d'étanchéité (1) selon la revendication 9,
**caractérisé en ce que** l'alésage fileté ou les plusieurs alésages filetés (23a - 23f) présentent respectivement un trou borgne, dans lequel le fond du trou borgne est réalisé en tant que surface de butée (21a - 21f) pour un corps de butée (19a - 19f).

11. Insert d'étanchéité (1) selon l'une quelconque des revendications précédentes,
**caractérisé en ce que** le corps étanche (15), lequel supporte la section étanche extérieure, présente une ou plusieurs parties surélevées périphériques.

12. Insert d'étanchéité (1) selon l'une quelconque des revendications précédentes,
**caractérisé par** plusieurs sections étanches intérieures (5) pour l'étanchéification par rapport à des conduits à diamètre différent, dans lequel une des plusieurs sections étanches intérieures (5) peut être assemblée par serrage de manière étanche aux fluides à un conduit de préférence au moyen du deuxième dispositif de serrage (9).

13. Insert d'étanchéité (1) selon la revendication 12,
**caractérisé en ce que** les plusieurs sections étanches intérieures (5) présentent des sections transversales sensiblement annulaires à diamètre différent et sont disposées de manière sensiblement coaxiale.

14. Insert d'étanchéité (1) selon l'une quelconque des revendications 12 ou 13,
**caractérisé en ce que** les plusieurs sections étanches intérieures (5) sont disposées les unes par rapport aux autres de manière décalée axialement.

15. Insert d'étanchéité (1) selon l'une quelconque des revendications 12 à 14,
**caractérisé en ce que** des sections étanches intérieures (5) adjacentes sont reliées à des sections d'entretoise (27a - 27f).

16. Insert d'étanchéité (1) selon l'une quelconque des revendications précédentes,
**caractérisé en ce que** la section étanche extérieure (3) est reliée à la section étanche intérieure (5) par l'intermédiaire d'une section de compensateur (33) flexible et à longueur variable.

17. Insert d'étanchéité (1) selon la revendication 16,
**caractérisé en ce que** la section de compensateur (33) est réalisée de manière symétrique en rotation et comprend une membrane pliée une fois ou plusieurs fois.
